# EUROPÄISCHE PATENTSCHRIFT

(11) **EP 1 034 096 B1**
(45) Veröffentlichungstag und Bekanntmachung des Hinweises auf die Patenterteilung: **13.06.2001**
(21) Anmeldenummer: 98956712.8
(22) Anmeldetag: 26.11.1998
(51) Int. Cl.: B60R 19/34, F16F 7/12, E21D 11/08

(54) **VORRICHTUNG ZUM GEGENSEITIGEN ABSTÜTZEN ZWEIER KONSTRUKTIONSTEILE**
DEVICE FOR THE MUTUAL SUPPORT OF TWO CONSTRUCTION MEMBERS
DISPOSITIF D'APPUI MUTUEL DE DEUX ELEMENTS DE CONSTRUCTION

(30) Priorität: 28.11.1997 AT 202897
(43) Veröffentlichungstag der Anmeldung: 13.09.2000
(73) Patentinhaber: Schubert, Wulf, 8020 Graz (AT); Moritz, Bernd, 8020 Graz (AT)
(72) Erfinder: Schubert, Wulf, 8020 Graz (AT); Moritz, Bernd, 8020 Graz (AT)
(74) Vertreter: Hübscher, Helmut, Dipl.-Ing.
(86) Internationale Anmeldenummer: AT9800286
(87) Internationale Veröffentlichungsnummer: WO9928162

(56) Entgegenhaltungen:
- EP-A- 0 794 350
- WO-A-97/13054
- DE-A- 2 460 598
- DE-U- 29 715 786
- GB-A- 2 308 100
- US-A- 4 047 388

## Beschreibung

### Technisches Gebiet

Die Erfindung bezieht sich auf eine Vorrichtung zum gegenseitigen Abstützen zweier Konstruktionsteile, bestehend aus wenigstens einem zwischen stirnseitigen Druckübertragungsplatten angeordneten Stauchrohr.

### Stand der Technik

Um bei einem Tunnelausbruch in einem schlechten Gebirge auftretende größere Deformationen beherrschen zu können, ist es bekannt, die Tunnelauskleidung durch in Tunnellängsrichtung verlaufende Kontraktionsfugen in Segmente zu unterteilen, wobei durch in die Kontraktionsfugen eingesetzte Stauchelemente ein entsprechender Ausbauwiderstand der Auskleidung trotz der vorgesehenen Kontraktionsfugen sichergestellt werden kann. Die über diese Stauchelemente übertragbaren Druckkräfte müssen allerdings begrenzt werden, um eine Überlastung der Auskleidung zu vermeiden. Um einen entsprechenden Stauchwiderstand über den geforderten Stauchweg zu erhalten, wurden bereits Stauchelemente in Form von Stauchrohren eingesetzt, die stirnseitig zwischen zwei Druckübertragungsplatten eingespannt sind. Bei einer den Ausbeulwiderstand dieser Stauchrohre übersteigenden Axialbelastung treten ringförmige Ausbeulungen der Stauchrohre auf, wobei die aufnehmbare Druckkraft abfällt, bis sich die Wände der sich bildenden Ringfalte aneinander abstützen. Danach steigt die übertragbare Druckkraft wieder bis zur nächsten Ausbeulung unter Ausbildung einer Ringfalte an, so daß sich der Vorgang wiederholt. Um die vergleichsweise hohe Lastspitze vor dem Beginn des Beulvorganges abzubauen, wird der anfängliche Stauchwiderstand der Stauchrohre durch in einem Ringbereich angeordnete Bohrungen verringert. Obwohl durch eine entsprechende Dimensionierung der Stauchrohre eine Anpassung an die jeweiligen Anforderungen möglich ist, wäre es wünschenswert, das Stauchverhalten solcher Stauchelemte zu verbessern und damit den wirksamen Ausbauwiderstand der Auskleidung zu erhöhen, ohne eine Überlastung der Auskleidung in Kauf nehmen zu müssen, die durch Spritzbetonschalen, Ortbetonschalen, Stahlausbauten oder Tübbingen ausgebildet werden kann. In diesem Zusammenhang ist ja zu bedenken, daß auch mit nicht axialsymmetrischen Belastungsverhältnissen gerechnet werden muß, die einen weiteren Druckabfall bedingen.

Stauchelemente dieser Art werden aber nicht nur im Bereich von Tunnelauskleidungen eingesetzt, sondern können überall dort Verwendung finden, wo es gilt, zwei Konstruktionsteile gegenseitig abzustützen, und zwar unter Vorgabe eines entsprechenden Stauchwiderstandes entlang eines Stauchweges, wie dies beispielsweise bei der Abstützung von Stoßstangen von Kraftfahrzeugen gefordert wird.

### Darstellung der Erfindung

Der Erfindung liegt somit die Aufgabe zugrunde, eine Vorrichtung zum gegenseitigen Abstützen zweier Konstruktionsteile der eingangs geschilderten Art mit einfachen konstruktiven Mitteln so auszugestalten, daß der mit dem Ausbeulen des Stauchrohres verbundene Druckabfall begrenzt und damit der Ausbauwiderstand der Auskleidung verbessert werden kann.

Die Erfindung löst die gestellte Aufgabe dadurch, daß das Stauchrohr zur Begrenzung von Ein- und Ausbeulungen koaxial zwischen zwei eine kürzere Länge als das Stauchrohr aufweisenden Stützrohren angeordnet ist, von denen das äußere Stützrohr das Stauchrohr mit radialem Abstand umschließt.

Da durch das äußere Stützrohr der bei einer entsprechenden Axialbelastung des Stauchrohres eingeleitete Ausbeulvorgang unterbrochen werden kann, bevor sich eine Ringfalte mit aneinanderliegenden Wänden ausbildet, kann auch der durch den Ausbeulvorgang bedingte Abfall der übertragbaren Druckkräfte beschränkt werden, was zu einem entsprechend höheren Verformungswiderstand führt. Die Begrenzung des Ausbeulvorganges durch das äußere Stützrohr darf jedoch nicht zu einem die Belastbarkeit beeinträchtigenden Einbeulen des Stauchrohres führen, so daß ein allfälliges Einbeulen durch ein inneres Stützrohr verhindert werden muß. Der radiale Abstand zwischen dem inneren Stützrohr und dem Stauchrohr ist daher klein zu halten. Der radiale Abstand zwischen dem Stützrohr und dem äußeren Stauchrohr bestimmt das Maß der möglichen Ausbeulung des Stauchrohres. Über den Ringspalt zwischen dem Stauchrohr und dem äußeren Stützrohr kann somit das Stauchverhalten des Stützrohres einfach gesteuert werden. Die Begrenzung der Ausbeulung des Stauchrohres durch die Stützrohre erzwingt außerdem weitgehend symmetrische Ausbeulverhältnisse, so daß auch bezüglich unsymmetrischer Stauchrohrbelastungen ein verbesserter Ausbeulwiderstand erreicht wird. Selbstverständlich ist das Stauchrohr um den geforderten Stauchweg länger als die Stützrohre auszubilden.

Werden keine konstruktiven Maßnahmen getroffen, um die erste Ausbeulung des Stauchrohres örtlich festzulegen, so ist mit dem Ausbeulen des Stauchrohres im Bereich einer Stirnseite zu rechnen. Aus diesem Grunde empfiehlt es sich, die beiden Stützrohre in je zwei mit den beiden Druckübertragungsplatten verbundene Rohrabschnitte zu unterteilen, so daß sichergestellt werden kann, daß sich die Stützrohre im Ausbeulbereich befinden, unabhängig davon, im Bereich welcher Druckübertragungsplatte die Ausbeulung beginnt. Zur örtlichen Festlegung des Ausbeulens und zum Abbau der vor dem Ausbeulen auftretenden Belastungsspitzen kann das Stauchrohr einen Ringabschnitt mit einem geringeren Ausbeulwiderstand aufweisen. Ein solcher geringerer Ausbeulwiderstand kann durch eine Querschnittsschwächung über Bohrungen im Stauchrohr erhalten werden, es ist aber auch möglich, das Stauchrohr ringförmig vorzubeulen.

Weisen der Ringspalt zwischen dem Stauchrohr und dem äußeren Stützrohr einerseits bzw. dem Stauchrohr und dem inneren Stützrohr anderseits eine Füllung, beispielsweise aus Sand oder Kunststoffschaumstoff, auf, so kann das Ausbeulverhalten zusätzlich beeinflußt werden.

Wird schließlich das äußere Stützrohr von wenigstens einem weiteren Stützrohr mit radialem Abstand koaxial umschlossen, wobei die Länge der Stützrohre mit zunehmenden Radius abnimmt, so kann eine vom Stauchweg abhängige, stufenweise Verringerung des mit dem Beulvorgang verbundenen Abfalls der übertragbaren Druckkräfte erzielt werden. Nach dem durch die Längendifferenz vom Stauchrohr und dem benachbarten äußeren Stützrohr gegebenen Stauchweg wird nämlich dieses nunmehr zwischen den Druckübertragungsplatten eingespannte Stützrohr zu einem Stauchrohr, dessen Beulverhalten durch ein weiteres Stützrohr in analoger Art bestimmt wird. Damit erhöht sich der Verformungswiderstand des Stauchelementes nach einem vorgegebenen Stauchweg, was beispielsweise dazu ausgenützt werden kann, die sich mit dem Aushärten des Betons erhöhende Belastbarkeit einer Betonauskleidung zu berücksichtigen.

### Kurze Beschreibung der Zeichnungen

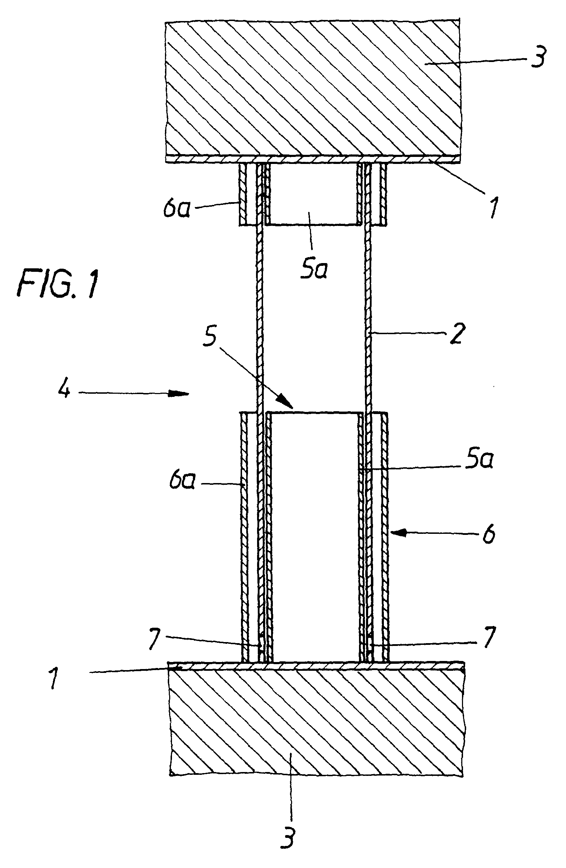

In der Zeichnung ist der Erfindungsgegenstand beispielsweise dargestellt. Es zeigen
- Fig. 1: eine erfindungsgemäße Vorrichtung zum gegenseitigen Abstützen zweier Segmente einer in Umfangsrichtung durch Kontraktionsfugen unterteilten Tunnelauskleidung in einem vereinfachten Axialschnitt,
- Fig. 2: das Stauchverhalten eines Stauchrohres gemäß dem Stand der Technik anhand des über dem Stauchweg aufgetragenen Kraftverlaufes und
- Fig. 3: eine der Fig. 2 entsprechende Darstellung des Stauchverhaltens einer erfindungsgemäßen Vorrichtung.

### Bester Weg zur Ausführung der Erfindung

Die erfindungsgemäße Vorrichtung gemäß dem dargestellten Ausführungsbeispiel besteht im wesentlichen aus zwei Druckübertragungsplatten 1, zwischen denen ein Stauchrohr 2 angeordnet ist. Über dieses Stauchrohr 2 stützen sich die Segmente 3 einer Tunnelauskleidung ab, die durch in Tunnellängsrichtung verlaufende Kontraktionsfugen 4 zwischen den Segmenten 3 unterteilt wird. Zum Unterschied zu bekannten Vorrichtungen dieser Art wird das Stauchrohr 2 nach der Erfindung koaxial zwischen einem inneren Stützrohr 5 und einem äußeren Stützrohr 6 angeordnet, die in zwei Abschnitte 5a bzw. 6a unterteilt sind. Diese Rohrabschnitte 5a und 6a sind jeweils mit einer der beiden Druckübertragungsplatten 1 verbunden. Im Bereich des unteren Stirnrandes des Stauchrohres 2 sind in diesem Bohrungen 7 vorgesehen, die den anfänglichen Ausbeulwiderstand des Stauchrohres 2 aufgrund einer Querschnittsschwächung bestimmen. Steigt die axiale Druckbelastung des Stauchrohres 2 über die Auskleidungssegmente 3 über den Ausbeulwiderstand an, so beginnt sich das Stauchrohr 2 im Bereich der Bohrungen 7 ringförmig auszubeulen.

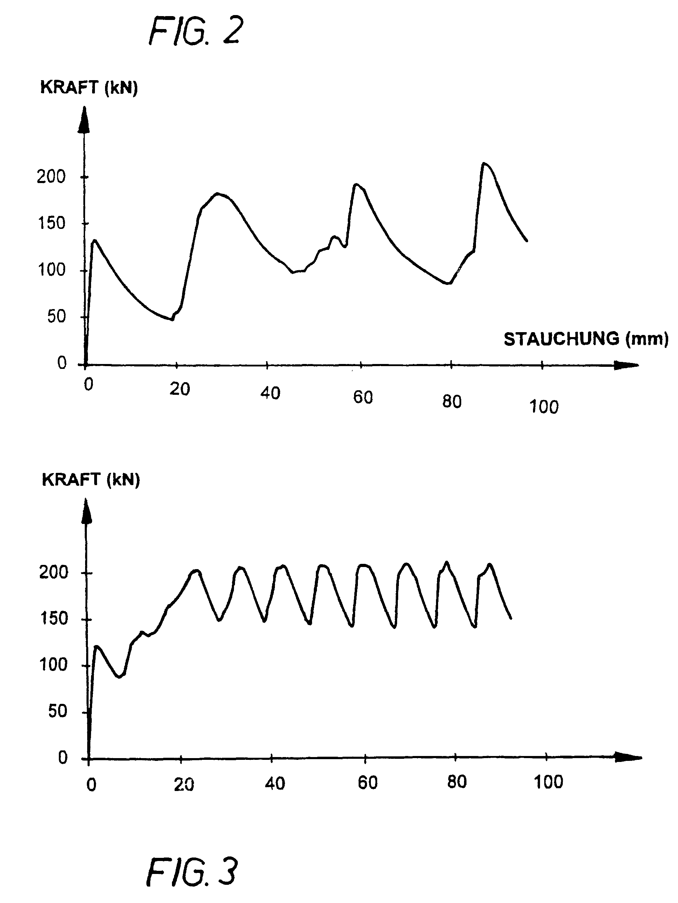

In den Fig. 2 und 3 ist der Kraftverlauf über dem Stauchweg eingezeichnet. Die Messungen wurden mit einem Stauchrohr aus Stahl St 37 vorgenommen, dessen Höhe 400 mm, dessen Durchmesser 88,9 mm und dessen Wanddicke 2,9 mm betrugen. Die Löcher 7 im Bereich der unteren Stirnseite wiesen einen Durchmesser von 15 mm auf. Wie sich sowohl anhand der Fig. 2 als auch der Fig. 3 ergibt, setzt der Ausbeulvorgang bei einer Kraft zwischen 130 und 140 kN ein, wobei aufgrund der Ausbeulung die übertragbare Kraft abfällt. Während bei der unbehinderten Ausbeulung des Stauchrohres gemäß der Fig. 2 die übertragbare Kraft auf etwa 50 kN bei einem Stauchweg von 20 mm abfällt, bevor sich eine Stabilisierung durch das Aneinanderlegen der Wände der sich bildenden ringförmigen Falte ergibt, wird der Ausbeulvorgang gemäß der Erfindung unterbrochen, sobald die Ausbeulung des Stauchrohres 2 durch das äußere Stützrohr 6 unterbunden wird. In dem der Fig. 3 zugrundeliegenden Ausführungsbeispiel wies das Außenrohr einen Durchmesser von 108 mm bei einer Wanddicke von 2,9 mm auf. Das Innenrohr hatte einen Durchmesser von 82,5 mm und einer Wanddicke von 2,6 mm. Unter diesen Randbedingungen konnte der Druckabfall auf etwa 100 kN bei einem Stauchweg von ca. 8 mm begrenzt werden. Wegen der Abstützung des Stauchrohres im Bereich der Auswölbung sowohl am äußeren Stützrohr 6 als auch am inneren Stützrohr 5 steigt die übertragbare Druckkraft bis zum Auftreten einer neuen Ausbeulung an, wobei wegen des nicht mehr geschwächten Stauchrohrquerschnittes der Ausbeulwiderstand gegenüber der ersten Ausbeulung höher liegt.

In ähnlicher Weise erfolgt auch bei dem Stauchrohr mit einer freien Ausbeulung ein Anstieg der übertragbaren Druckkräfte über den Ausbeulwiderstand der ersten Ausbeulung, wie dies die Fig. 2 zeigt. Mit der Führung des Stauchrohres 2 zwischen den beiden Stützrohren 5 und 6 wird der Ausbeulwiderstand bei der erfindungsgemäßen Vorrichtung aber erst bei einer höheren Kraft überwunden, wobei der bei der neuerlichen Ausbeulung auftretende Abfall der übertragbaren Kräfte wiederum durch das äußere Stützrohr 6 im Vergleich zur freien Ausbeulung nach der Fig. 2 begrenzt wird. Durch den Vergleich der Fig. 2 und 3 ergibt sich somit unmittelbar, daß mit Hilfe einer erfindungsgemäßen Vorrichtung die übertragbaren Kräfte gezielt vergrößert werden können, und zwar bei einer entsprechenden Abstimmung auf den jeweiligen Stauchweg.

Obwohl die erfindungsgemäße Vorrichtung anhand einer Tunnelauskleidung näher beschrieben wurde, ist der Einsatz der erfindungsgemäßen Vorrichtung selbstverständlich nicht auf dieses Anwendungsgebiet beschränkt. Sie kann überall dort mit Vorteil angewendet werden, wo es gilt, die Übertragung bestimmter Druckkräfte über einen Stauchweg sicherzustellen, wie dies beispielsweise bei der Abstützung von Stoßstangen von Kraftfahrzeugen gefordert wird.

## Patentansprüche

1. Vorrichtung zum gegenseitigen Abstützen zweier Konstruktionsteile, bestehend aus wenigstens einem zwischen stirnseitigen Druckübertragungsplatten (1) angeordneten Stauchrohr (2), dadurch gekennzeichnet, daß das Stauchrohr (2) zur Begrenzung von Ein- und Ausbeulungen koaxial zwischen zwei eine kürzere Länge als das Stauchrohr (2) aufweisenden Stützrohren (5, 6) angeordnet ist, von denen das äußere Stützrohr (6) das Stauchrohr (2) mit radialem Abstand umschließt.

2. Vorrichtung nach Anspruch 1, dadurch gekennzeichnet, daß die beiden Stützrohre (5, 6) in je zwei mit den beiden Druckübertragungsplatten (1) verbundene Rohrabschnitte (5a, 6a) unterteilt sind.

3. Vorrichtung nach Anspruch 1 oder 2, dadurch gekennzeichnet, daß das Stauchrohr (2) in an sich bekannter Weise einen Ringabschnitt mit einem geringeren Ausbeulwiderstand aufweist.

4. Vorrichtung nach einem der Ansprüche 1 bis 3, dadurch gekennzeichnet, daß der Ringspalt zwischen dem Stauchrohr (2) und dem äußeren Stützrohr (6) einerseits bzw. zwischen dem Stauchrohr (2) und dem inneren Stützrohr (5) anderseits eine Füllung, beispielsweise Sand oder Schaumstoff, aufweist.

5. Vorrichtung nach einem der Ansprüche 1 bis 4, dadurch gekennzeichnet, daß das äußere Stützrohr (6) von wenigstens einem weiteren Stützrohr mit radialem Abstand koaxial umschlossen wird, wobei die Länge der Stützrohre (6) mit zunehmendem Radius abnimmt.

## Claims

1. A system for the mutual support of two structural parts, consisting of at least one compression tube (2) disposed between end-face pressure-transmission plates (1), characterised in that for the purpose of limiting inward and outward bulging the compression tube (2) is disposed coaxially between two support tubes (5,6) which have a shorter length than the compression tube (2) and of which the outer support tube (6) surrounds the compression tube (2) with radial spacing.

2. A system according to claim 1, characterised in that the two support tubes (5,6) are each divided into two tube portions (5a, 6a) connected to the two pressure-transmission plates (1).

3. A system according to claim 1 or 2, characterised in that the compression tube (2) has, in manner known per se, an annular portion having less resistance to bulging.

4. A system according to any one of claims 1 to 3, characterised in that the annular gap between the compression tube (2) and the outer support tube (6), on the one hand, and between the compression tube (2) and the inner support tube (5), on the other hand, has a filling, for example sand or foam.

5. A system according to any one of claims 1 to 4, characterised in that the outer support tube (6) is coaxially surrounded with radial spacing by at least one additional support tube, the length of the support tubes (6) decreasing with increasing radius.

## Revendications

1. Un dispositif pour soutenir mutuellement deux parties de construction, constitué d'au moins un tube d'écrasement (2), disposé entre des plaques de transmission de pression (1) situées côté frontal, caractérisé en ce que, pour limiter les déformations de flambage vers l'intérieur et l'extérieur, le tube d'écrasement (2) est disposé coaxialement entre deux tubes de soutien (5, 6) présentant une longueur inférieure à celle du tube d'écrasement (2), tubes de soutien dont le tube de soutien extérieur (6) entoure à distance radiale le tube d'écrasement (2).

2. Dispositif selon la revendication 1, caractérisé en ce que les deux tubes de soutien (5, 6) sont subdivisés en tronçon de tubes (5a, 6a), chacun reliés aux deux plaques de transmission de pression 1.

3. Dispositif selon la revendication 1 ou 2, caractérisé en ce que le tube d'écrasement (2) présente, de manière connue en soi, un tronçon annulaire à faible résistance à un flambage produisant une déformation orientée vers l'extérieur.

4. Dispositif selon l'un des revendications 1 à 3, caractérisé en ce que l'intervalle annulaire, entre le tube d'écrasement (2) et le tube de soutien extérieur (6), d'une part, ou entre le tube d'écrasement (2) et le tube de soutien intérieur (5), d'autre part, contient une masse de remplissage, par exemple en sable ou en substance alvéolaire.

5. Dispositif selon l'un des revendications 1 à 4, caractérisé en ce que le tube de soutien extérieur (6) est entouré par au moins un autre tube de soutien, placé coaxialement et à distance radiale, la longueur des tubes de soutien (6) allant en diminuant lorsque le rayon augmente.
